# EUROPEAN PATENT SPECIFICATION

(11) **EP 0 551 280 B1**
(45) Date of publication and mention of the grant of the patent: **27.12.1995**
(21) Application number: 91913142.5
(22) Date of filing: 09.07.1991
(51) Int. Cl.: B62D 27/06, B62D 33/02

(54) **A DEVICE AT VEHICLE LOAD PLATFORMS WITH HOLDERS FOR STANCHIONS**
VORRICHTUNG FÜR FAHRZEUGLADEPLATTFORMEN MIT RUNGENHALTERN
DISPOSITIF SITUE SUR DES PLATES-FORMES DE CHARGEMENT DE VEHICULES COMPORTANT DES SUPPORTS D'ETAN ONS

(30) Priority: 09.07.1990 SE 9002395
(43) Date of publication of application: 21.07.1993
(73) Proprietor: ROSEN, Göran, 531 16 Lidköping (SE)
(72) Inventor: ROSEN, Göran, 531 16 Lidköping (SE)
(74) Representative: Roth, Ernst Adolf Michael
(86) International application number: SE9100489
(87) International publication number: WO9200868

(56) References cited:
- EP-A- 0 134 877
- EP-A- 0 267 174
- EP-A- 0 334 387
- DE-C- 2 938 554

## Description

The present invention refers to a device at vehicle load platforms, with fixedly arranged platform holders at its edge beam for supporting stanchions, which comprises at least a platform locking mechanism arranged in a stanchion housing for locking the stanchion to the platform holder, which locking mechanism of the stanchion comprises at least one wedge, arranged to cooperate with at least one wedge seat attached to the platform beam.

### Background of the invention

Stanchions for load platforms of the type mentioned above, e.g. DE-C-1580650, since the mid- sixties, when these were developed, have gone through relatively small changes. The still consist of a large number of mechanically cooperating parts, where every single part demands machining and surface conditioning and assembly, which results in relatively high cost of manufacture.

The housing of the stanchion until now has been produced from two or several parts, namely a solid, rear sheet and a U- formed covering sheet, which is welded to the rear sheet, after locating and mounting of all locking mechanisms. After the welding of the rear sheet to the covering sheet, and an aligning of the stanchion also has been necessary in addition to a further surface conditioning.

A complete stanchion program comprises front, lateral and rear stanchions in a large amount of designs, where the height, the number of flap locks, the design of the attachment of the load platform, with or without cover support, with or without TIR loop and so on may vary. This means that in spite of a considerable standardization of the components included the number of parts is still very large, which in turn leads to extensive storage space.

Certain attempts have been made (WO 83/01420) to simplify the manufacture of stanchions for load platforms by using specially manufactured aluminium profiles in as large extent as possible. Its true that a stanchion of this type as for the weight will be lighter and demands less surface treatment, but for the rest the drawbacks mentioned above will remain. Moreover such a stanchion is nearly impossible to straighten if it has been exposed to a deformation, which often occurs, since the load during transport easily is displaced and the stanchions have to absorb these stresses.

The fastening of the stanchion to the load platform is carried out by means of a platform holder, which is welded to the frame beam of the load platform and the design of the platform holder implies that the stanchion is weakest at the mounting point, since platform holder has to pass through an opening made in the rear sheet of the stanchion, which opening is so small that only a small space remains for longitudinal reinforcement irons. When such a stanchion is exposed to a pressure from inside of the load platform, the deformation occurs at the root of the stanchion, whereby also those details which cooperate with the load platform locking mechanism are deformed, which in the case of the aluminium stanchions implies that such a stanchion has to be discarded.

EP 0334387 shows a stanchion and holder in which the stanchion is only loosely connected to the holder.

DE 2938554 discloses a stanchion holder with holding means located centrally in the holder. This document illustrates clearly how a prior art holder is connected to the cargo platform by means of welding to a relatively small contact surface.

### The object of the invention

The object of the invention is to provide a platform holder and a stanchion for a load platform, where the stanchion housing even at the stanchion root is so strong that it can absorb existing loads without being deformed, and where there is a possibility to move the deformation zone to a portion of the stanchion where the deformation damages do not influence vital parts of the locking mechanism, and where a straightening of the stanchion can be carried out in a simple way. These problems have been solved by the features stated in the characterizing parts of the patent claims.

### Description of the drawings

The invention will be described in greater detail with respect to the accompanying drawings,which show some embodiments of the invention.

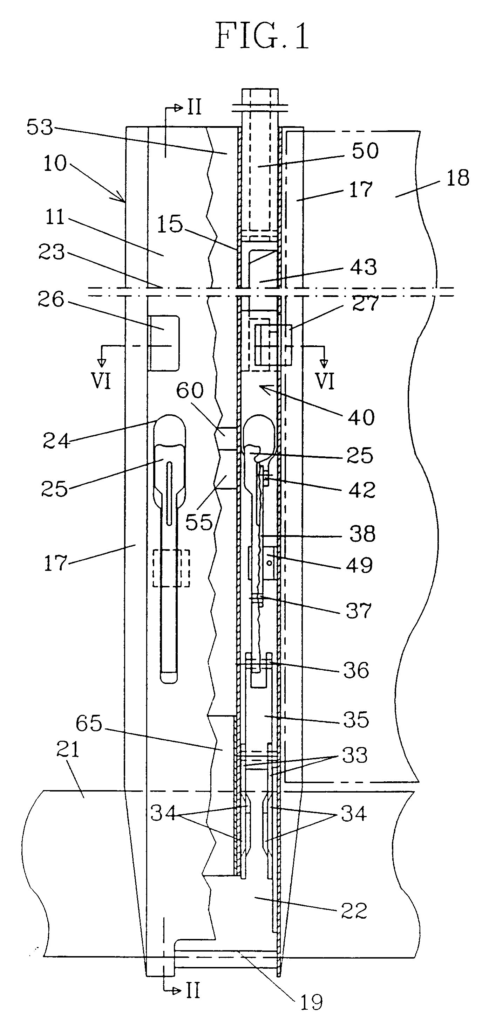

Fig. 1 shows a stanchion according to the invention in a frontal view with a part of the front side of the stanchion broken up to show the locking mechanisms of the stanchion.
Fig. 2 shows a section along the line II-II in fig. 1, with the locking mechanisms in locking position.
Fig. 3 is a view analogous to that of fig. 2 with the flap locking mechanism in open position.
Fig. 4 is likewise a section analogous to that of fig. 2 with the flap locking mechanism as well as the platform locking mechanism in open position.
Fig. 5 shows the stanchion according to fig. 1 in a view from the rear.
Fig. 6 is a section along the line VI-VI in fig. 1.

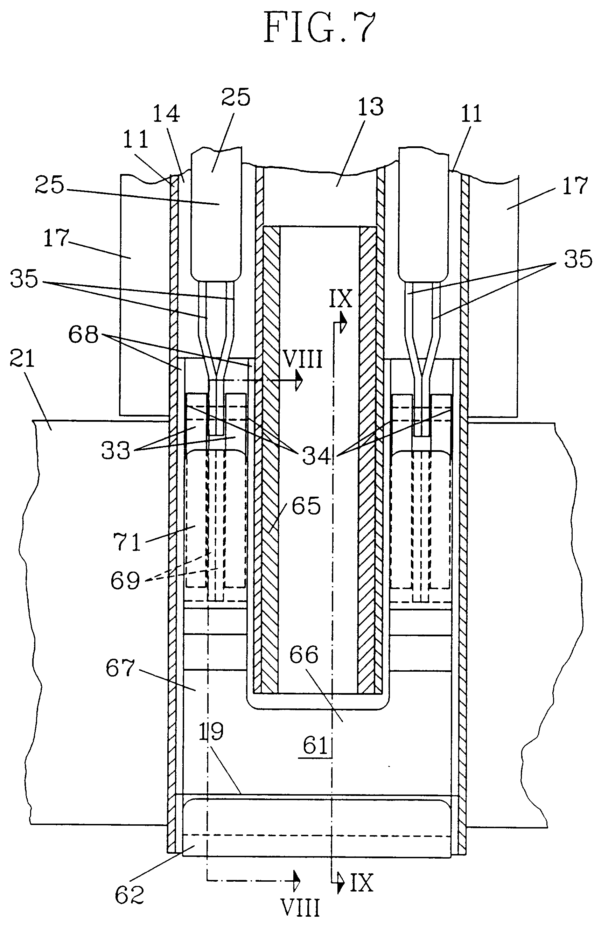

Fig. 7 shows in greater scale a section through the lower part of the stanchion fitted into a platform holder.

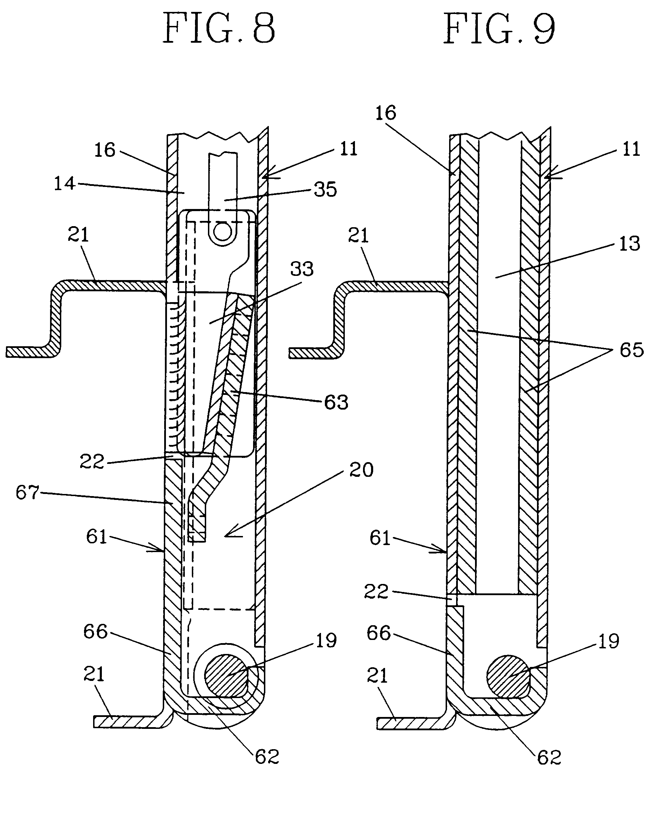

Fig. 8 shows a section along the line VIII-VIII in fig. 7.
Fig. 9 shows a section along the line IX-IX in fig. 7.

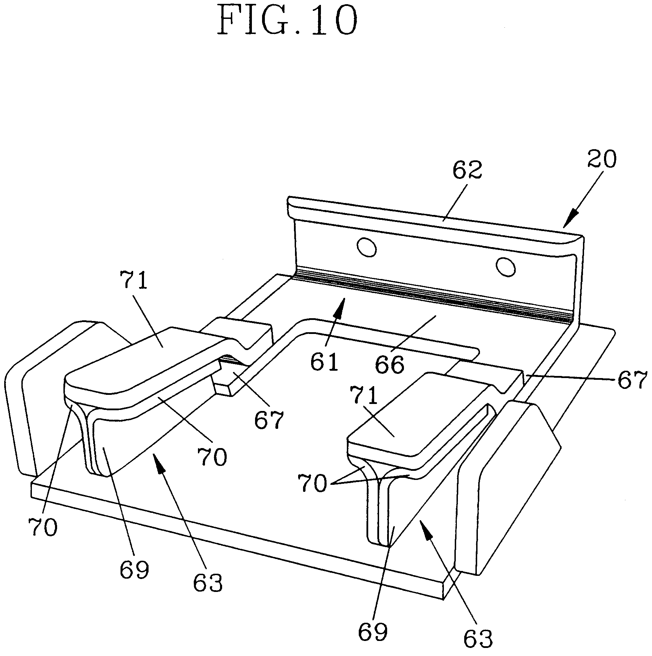

Fig. 10 shows the load platform in a perspective view.

### Description of embodiments

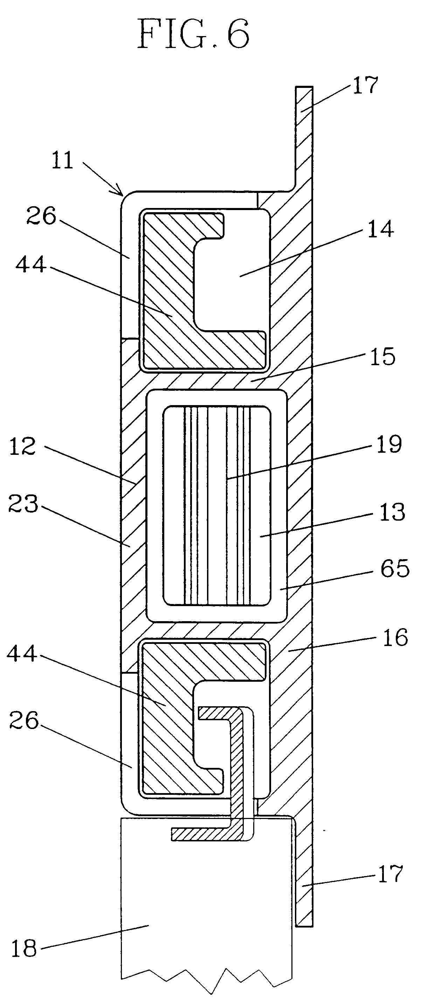

The stanchion according to the invention is as a whole designated with 10 and consists of a stanchion housing 11, which is preferably constituted by an aluminium profile made by extrusion and which can be cut into suitable lengths. The stanchion housing 11 in cross section has the form of a closed hollow profile 12, such as can be seen in fig. 6, and which profile is divided into two or three longitudinal channels, of which one in the continuation is called reinforcement channel 13 and the other or the others is/ are called locking channel(s) 14. The channels are separated by partition walls 15 and the stanchion housing is limited at the rear by a solid rear wall 16, which has greater width than the width of the hollow profile 12, so that shoulder lists 17 are formed, against which load flaps 18 rest, when these are in folded up position. The stanchion housing 11 at the top and at the bottom is open and at the bottom end is provided with a stanchion shaft 19 intended to be placed in a stanchion holder 20, which is fixedly connected with the edge beam 21 of the load platform. At the lower part of the stanchion housing a recess 22 is made in the rear wall 16, which mainly has the same but somewhat larger form than the outline of the load platform holder 20, and through which recess 22 the load platform holder can pass when the stanchion is pivoted about the stanchion shaft 19 and to fit up against the edge beam 21.

As mentioned above the stanchion may consist of two or three longitudinal channels 13, 14 depending if it is a single stanchion e.g. at the front end of the loading platform to fix one single load platform flap or also a double stanchion for fixing of one load flap 18 on each side of the stanchion. In the continuation such a double stanchion will be described in closer detail. On the front side of the stanchion housing oblong apertures 24 are machined for each control lever 25 and rectangular apertures 26, which extend from the front side of the stanchion housing and along its lateral wall to the rear wall 16, and which apertures, are intended for receiving of lock fittings 27 fixedly arranged at the edge fitting of the load flap 18.

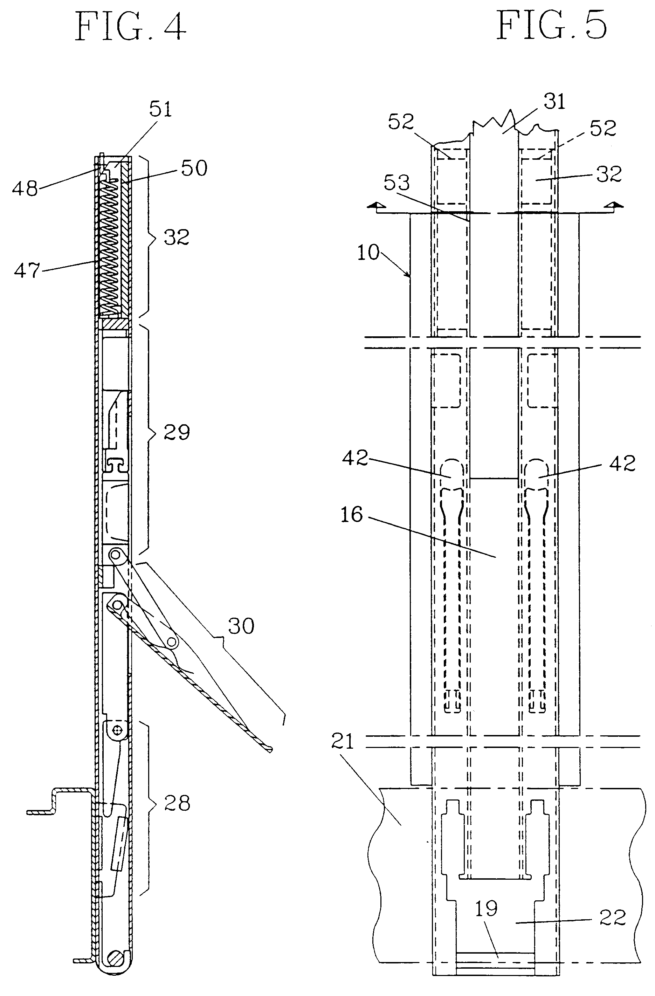

The locking channels 14 of the stanchion housing 11 are provided partly with a load platform mechanism 28 and partly a flap locking mechanism 29, which both are interconnected by means of a control section 30. If the stanchions also are going to support cover supports 31 a suitable locking mechanism 32 is also arranged in the upper part of the locking apparatus channels 14 for locking of the cover supports 31 - - see fig. 4.

The load platform locking mechanism 28 consists as previously known of at least one locking wedge 33, which cooperates with guiding rails 34 provided at the platform holder 20. The locking wedge 33 in its upper end is pivotably connected to an interconnection link 35, which in turn is connected by a first pivot shaft 36 to said control lever 25.
at some distance from the first pivot shaft 36 is provided a second pivot shaft 37, on which a link arm 38 is articulatedly pivoted, the opposite end of which is articulatedly connected with the flap locking mechanism 29. In the embodiment shown this comprises a connection part 39, pivotably connected with said link arm 38 and a flap locking bolt 40. Depending on the width of the load flap 18 this may be provided with one, two or three lock fittings 27, which each cooperate with each flap locking bolt 40 in the stanchion, which also can be seen in fig. 12. In order to overcome the distances between the flap locking bolts 40 spacing pieces 41 are provided, which can be of different sizes.

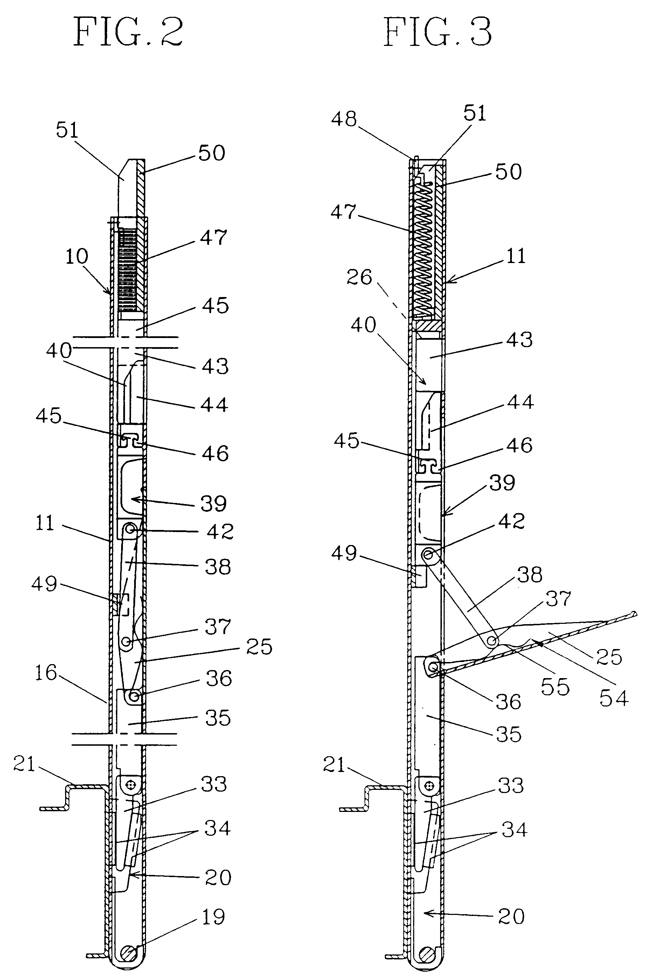

The parts contained in the flap locking mechanism 29 can be constituted by form parts, preferably of plastic, which are mutally untwistable and axially stiff and easily releasably connected to each other. This form parts with a small play fill substantially the whole cross section in the channel 14, the wall surfaces of which serve as slide and guide surfaces. Alternatively certain parts can be made of steel, while the slide and guide surfaces are made of a suitable plastic material. The connection part 39 or if this forms an integral part with the flap locking bolt 40 is provided with a recess, the object of which is to faciliate the folding out of the control lever 25. The flap locking bolt 40 comprises partly a lock port 43, through which the locking fitting 27 of the load flap 18 can be brought, and which locking port is located right ahead of the opening 26 when the locking mechanisms take the position shown in fig. 3 and 4, that is a position in which the lock fitting 27 freely can move in and out of said lock port 43. Below this is provided a locking pin 44, which in cross section is L-formed, and which locks the lock fitting 27 as well perpendicular to the plane of the flap lock as in the plane of the flap lock. As well the flap locking bolt 40 as the spacing pieces 41 at one end are formed with male formed coupling means 44 and at the opposite end with a female formed coupling means 46. On the flap locking bolt 40 located in the uppermost part of the stanchion housing 11 acts a compression spring 47, which by means of a shoulder 48 is attached to the inside of the uppermost part of the stanchion housing.

The movement upwards of the load platform locking mechanism 28 and the downward movement of the flap locking mechanism 29 are limited by a common stop means 49, which is attached to the inside of the stanchion housing. In the folded up and locked position of the control lever 25, as can be seen in fig. 2 the locking wedge 33 is in engagement with the guide rails 34 of the load platform attachment simultaneously as the flap locking bolt 40 is located in its upper locking end position, in which the both locking mechanisms are under control of the compressed compression spring 47. Since the pivot axis 37 is located inside an imagined line through the pivoting axes 36 and 42, a stable locking position for the control lever 25 is obtained, even when this is standing under a powerful spring pressure.

If the stanchion 10 even is to be extended by an extension part, in the continuation called cover support 31, the upper flap locking bolt 40 is completed by a lock 50, which is provided with a longitudinal slot 51 for receiving the compression spring 47. In locking position one part of the lock 50 is in egagement with the locking sleeves 52 - fig. 5 - of the cover support 31. A stanchion housing 11, to which a cover support 31 shall be possible to connect, right in front of the reinforcement channel 13 at the upper part of the stanchion is formed with an opening 53 in the rear wall 16, which extends a distance downwards from the upper end edge of the stanchion.

The load platform 20 comprises a U-formed holder plate 61, the center part 66 of which in its lower part is formed with a hook 62 for receiving the stanchion shaft 19 of the stanchion housing 11. At the shanks 67 of the holder plate 61 are welded two wedge seats 63 which are T-formed in cross section, the webs 69 of which form substantially right angle with the holder plate and the transversal flange 70 is reinforced by means of a reinforcement plate 71, which partly overlaps the shanks 67 of the holder plate 61. The wedge seats diverge in direction towards the midportion 66 and form tapered seats for the wedges 33 of the platform locking mechanism 28. These are provided in pairs and cooperate with each side of the web 69. The wedges are moreover connected to guide rails 34, which guide the wedges along the inside of channel 14.

Between the guide rails 34 and the channel inner walls are provided friction reducing surfaces 68. The distance between the wedge seats is chosen such that the reinforcement channel 13 of the stanchion housing can extend as far as to the upper edge of the center part 66 of the holder plate, which means that a reinforcement profile 65 inserted in the reinforcement channel 13, e.g. in the form of a square cross section tube, gives a very solid reinforcement within the portions of the lower part of the stanchion, where the stresses are largest.

The invention is not limited to the embodiments shown and described, but several variations are possible within the scope of the claims.

### DISPOSITION OF REFERENCE DESIGNATIONS

- 10 =: stanchion
- 11 =: stanchion housing
- 12 =: hollow profile
- 13 =: reinforcement channel
- 14 =: locking channel
- 15 =: partition wall
- 16 =: rear wall
- 17 =: shoulder lists
- 18 =: load flap
- 19 =: stanchion axis
- 20 =: load platform holder
- 21 =: the edge beam of the load platform
- 22 =: recess in the rear wall
- 23 =: front side of the stanchion housing
- 24 =: oblong opening for the control arm 25
- 25 =: control lever
- 26 =: rectangular opening for lock fittings 27
- 27 =: lock fittings
- 28 =: load platform locking mechanism
- 29 =: flap locking mechanism
- 30 =: control section
- 31 =: extension part/ cover support
- 32 =: locking mechanism for the cover support 31
- 33 =: locking wedge
- 34 =: guide rails
- 35 =: connection link
- 36 =: first pivoting shaft
- 37 =: second pivoting skaft
- 38 =: linkarm
- 39 =: connection part
- 40 =: flap lock bolt
- 41 =: spacing pieces
- 42 =: third pivoting shaft
- 43 =: locking port
- 44 =: locking pin
- 45 =: male formed coupling means
- 46 =: female formed coupling means
- 47 =: compression spring
- 48 =: shoulder
- 49 =: stop means
- 50 =: lock
- 51 =: slot
- 52 =: locking sleeves
- 53 =: opening in the rear wall
- 61 =: holder plate
- 62 =: hook
- 63 =: wedge seat
- 64 =: tapered space
- 65 =: reinforcement profile
- 66 =: center part
- 67 =: shanks
- 68 =: friction reducing surfaces
- 69 =: web
- 70 =: flange
- 71 =: reinforcement plate

## Claims

1. Device at vehicle load platforms, with fixedly arranged platform holders (20) at its edge beam (21) for supporting stanchions (10), which comprises at least a platform locking mechanism (28) arranged in a stanchion housing (11) for locking the stanchion (10) to the platform holder (20), which locking mechanism (28) of the stanchion (10) comprises at least one wedge (33), arranged to cooperate with at least one wedge seat (63) attached to the platform beam (21),
**characterized** in
that the platform holder (20) comprises a U-formed holder plate (61) with a center part (66) and shanks (67), on each side of the center part (66),
that the shanks (67) are provided each with an upstanding wedge seat (63),
that in the lower part of the stanchion, is provided a reinforcement profile (65), in the area where the root portion of the stanchion is exceeding in the part of the stanchion which is situated above the load platform,
that in the rear wall (16) of the stanchion housing (11) at its lower end is provided a corresponding U-formed recess (22), as a passage for the holder plate (61), and
that part of the reinforcement profile (65) is arranged between the shanks of the U-formed recess (22).

2. Device according to claim 1,
**characterized** in
that the stanchion housing consists of a hollow profile which is closed in cross section, the interior of which is divided into at least two longitudinal channels (13,14),
that in the lower part of one of the channels (14) is provided a platform locking mechanism (28) for cooperation with the platform holder (20) and in the lower part of the other channel (13) is provided a reinforcement profile (65), whereby the first locking channel (14) is provided to end in the shanks of the U-formed recess (22), while the second reinforcement channel (13) is provided to extend to the center portion of the U.

3. Device according to claim 1,
**characterized** in that the wedge seat (63) comprises of a profile (71,71), which is T-formed in cross section, provided to diverge in direction towards the holder plate (61).

## Patentansprüche

1. Vorrichtung auf Ladeflächen von Fahrzeugen mit fest montierten Halterungen (20) am Randbalken (21) der Ladefläche zur Befestigung von Rungen (10), die zumindest eine im Rungenmantel (11) befindliche Verriegelungsvorrichtung (28) zum Arretieren der Runge (10) in der Rungenhalterung (20) aufweisen, wobei die Verriegelungsvorrichtung (28) der Runge mindestens einen Keil (33) aufweist, der zumindest mit einem am Ladeflächenrand (21) angebrachten Keilsitz (63) zusammenwirkt,
**dadurch gekennzeichnet,**
daß die Rungenhalterung (20) eine U-förmige Halterungsplatte (61) mit einem Mittelteil (66) und Schaftenden (67) an beiden Seiten des Mittelteils (66) aufweist,
daß die Schaftenden (67) jeweils mit einem aufrecht stehenden Keilsitz (63) versehen sind,
daß sich im unteren Teil der Runge, in dem Bereich wo der Fußteil der Runge in den Rungenteil übergeht, der oberhalb der Ladefläche liegt, ein Versteifungsprofilelement (65) befindet,
daß sich in der Rückwand (16) des Rungenmantels (11) am unteren Ende eine entsprechende U-förmige Aussparung (22) befindet, durch die die Halterungsplatte (61) hindurchgreift und
daß ein Teil des Versteifungsprofilelements (65) zwischen den Schaftenden des U-förmigen Aussparung (22) angeordnet ist.

2. Verfahren nach Anspruch 1,
**dadurch gekennzeichnet,**
daß der Rungenmantel (11) aus einem im Querschnitt geschlossenen Hohlprofil (12) besteht, dessen Inneres in mindestens zwei in Längsrichtung verlaufende Kanäle (13,14) unterteilt sind,
daß im unteren Teil eines der Kanäle (14) eine Ladeflächenarretiervorrichtung (28) angeordnet ist, die mit der Ladeflächenhalterung zusammenwirkt, und sich im anderen Kanal (13) ein Versteifungsprofilelement (65) befindet; dabei endet der erste Arretierkanal (14) in den Schaftenden der U-förmigen Aussparung (22), während der zweite Versteifungskanal (13) in Mittelteil des U endet.

3. Vorrichtung nach Anspruch 1,
**dadurch gekennzeichnet,**
daß der Keilsitz (63) ein Profil (71,71) aufweist, das im Querschnitt T-förmig ist und zur Halterungsplatte (61) hin konisch geneigt ist.

## Revendications

1. Dispositif sur plate-forme de chargement de véhicule, comprenant des supports de plate-forme (20) montés fixes sur son longeron de bord (21) pour supporter des étançons (10), dispositif qui comporte au moins un mécanisme de verrouillage de plate-forme (28) agencé dans un boîtier d'étançon (11) pour bloquer l'étançon (10) sur le support de plate-forme (20), ledit mécanisme de verrouillage (28) de l'étançon (10) comprenant, au moins, une cale (33), agencée pour coopérer avec, au moins, un siège de cale (63) fixé au longeron de plate-forme (21), caractérisé en ce que le support de plate-forme (20) comprend une plaque de support en forme de U (61) avec une partie centrale (66) et des ailes (67) de chaque côté de la partie centrale (66), en ce que chacune des ailes (67) est pourvue d'un siège de cale (63) en position dressée, en ce que dans la partie inférieure de l'étançon, il est prévu un profilé de renforcement (65), dans la zone où la partie de pied de l'étançon se prolonge dans la partie de l'étançon qui est située au-dessus de la plate-forme de chargement, en ce que dans la paroi arrière (16) du boîtier d'étançon (11), à son extrémité inférieure, il est prévu une cavité correspondante en forme de U (22) servant de passage pour la plaque de support (61), et en ce qu'une partie du profilé de renforcement (65) est disposée entre les ailes de la cavité en forme de U (22).

2. Dispositif selon la revendication 1, caractérisé en ce que le boîtier d'étançon est constitué par un profilé creux, fermé en coupe transversale, dont l'intérieur est divisé en au moins deux canaux longitudinaux (13, 14), en ce que, dans la partie inférieure de l'un des canaux (14), il est prévu un mécanisme de verrouillage de plate-forme (28) destiné à coopérer avec le support de plate-forme (20) et, dans la partie inférieure de l'autre canal (13), il est prévu un profilé de renforcement (65), le premier canal de verrouillage (14) étant agencé pour aboutir dans les ailes de la cavité en forme de U (22), tandis que le second canal de renforcement (13) est agencé pour s'étendre jusqu'à la partie centrale du U.

3. Dispositif selon la revendication 1, caractérisé en ce que le siège de cale (63) comprend un profilé (71, 71) qui est en forme de T en coupe transversale, agencé pour diverger en direction de la plaque de support (61).
